# EUROPEAN PATENT APPLICATION

(11) **EP 4 138 362 A1**
(43) Date of publication of application: **22.02.2023**
(21) Application number: 21199769.7
(22) Date of filing: 29.09.2021
(51) Int. Cl.: H04L 41/5054, H04L 41/0893, H04L 41/044, H04L 41/5025

(54) **METHOD AND SYSTEM FOR DEPLOYING INTELLIGENT EDGE CLUSTER MODEL**

(30) Priority: 19.08.2021 IN 202011035654
(71) Applicant: Sterlite Technologies Limited, 122002 Gurgaon, Haryana (IN)
(72) Inventor: AGARWAL, Puneet Kumar, 122002 Haryana (IN)
(74) Representative: Hepworth Browne

(57) **Abstract**

The present disclosure relates to a method for deploying an intelligent edge cluster model includes checking an application requirement and a key performance indicator at a first edge node, dynamically assigning a first resource from the resources in the virtual resource pool of the intelligent edge cluster model to the first edge node, instructing a command to another edge node to assign one or more resources to the first edge node. In particular, the intelligent edge cluster model includes edge nodes (102a-102e) and master controller (310) have corresponding one or more resources combined to form the virtual resource pool.

## Description

### TECHNICAL FIELD

Embodiments of the present disclosure relate to a field of wireless communication. And more particularly, relates to a method and a system for deploying an intelligent edge cluster model in the wireless communication system.

The present application claims the benefit of Indian Application No. 202011035654 titled "Method and System for Deploying Intelligent Edge Cluster Model" filed by the applicant on 19/08/2021, which is incorporated herein by reference in its entirety.

### Background Art

Due to the increasing demand of latency sensitive and bandwidth hungry applications, there is a need to deploy a near end edge network. The near end edge network may serve and fulfil the requirements of the high demanding applications in an effective way from its nearest possible coordinates.

The demands of users can be served by both wireless network and wireline networks, as per its availability, so that a multi-service near end edge network can be deployed to support fixed and mobility user requirements seamlessly. In order to serve the dynamic behavior and specific demands from the applications, virtualization and cloud computing are very effective and the number of standard bodies and open communities are working in the same directions to build a framework for edge sites so that a multi-access computing can be adopted and served in an effective manner.

However, the biggest challenge for a service provider is to determine the right and optimum set of physical resources which they can deploy at near end edge sites as per the realized and practical application demands and not on the futuristic and predictable requirements. Furthermore, there is a need to effectively and dynamically build/fulfil edge infrastructure requirements based on business triggers/requirements rather than on technological progression.

US Patent Application US20200145337A1 discloses various approaches for implementing platform resource management. In an edge computing system deployment, an edge computing device includes processing circuitry coupled to a memory. The processing circuitry is configured to obtain, from an orchestration provider, a Service Level Objective (SLO) (or a Service Level Agreement (SLA)) that defines usage of an accessible feature of the edge computing device by a container executing on a virtual machine within the edge computing system. A computation model is retrieved based on at least one key performance indicator (KPI) specified in the SLO. The defined usage of the accessible feature is mapped to a plurality of feature controls using the retrieved computation model. The plurality of feature controls is associated with platform resources of the edge computing device that are pre-allocated to the container. The usage of the platform resources allocated to the container is monitored using the plurality of feature controls.

Chinese Patent Application CN111327651A discloses a method for providing a resource downloading method, a resource downloading device, an edge node, and a storage medium, and relates to the technical field of Internet of things. According to the method and the device, the resources are shared among all edge nodes of the same local area network, when any edge node needs to download the resources, the resources can be downloaded from other edge nodes of the local area network, so that the function of near downloading is achieved, compared with the method and the device for downloading the resources from the cloud, the network overhead is greatly saved, the network time delay is reduced, and the resource downloading efficiency is improved. Meanwhile, in a stably running system, the edge nodes can download resources without keeping communication with the cloud through the Internet, so that the performance overhead of the edge nodes is greatly reduced.

There is an urgent need for a technical solution that overcomes the above stated limitations in the prior arts. Hence, the present invention focuses on a system for deploying intelligent edge cluster models and a method thereof.

Any references to methods, apparatus, or documents of the prior art are not to be taken as constituting any evidence or admission that they formed, or form part of the common general knowledge.

### SUMMARY OF THE DISCLOSURE

Embodiments of the present disclosure provide a system and method for deploying intelligent edge cluster models in a wireless communication system.

According to a first aspect, the method for deploying an intelligent edge cluster model. In particular, the method includes steps of checking an application requirement and at least one key performance indicator at a first edge node from a plurality of edge node, dynamically assigning a first resource from a one or more resources in a virtual resource pool of the intelligent edge cluster model to the first edge node based on the application requirement and an at least one key performance indicators and instructing one or more commands to another edge node in the intelligent edge cluster model for assigning one or more resources to the first edge node.

In accordance with an embodiment of the present invention, the intelligent edge cluster model includes a plurality of edge nodes and the master controller having one or more resources. In particular, one or more resources are combined to form the virtual resource pool to fetch the resources from any of the plurality of edge nodes and the master controller.

In accordance with an embodiment of the present invention, one or more resources includes physical resources, functions, applications, and virtual machines.

According to a second aspect of the present disclosure, the step of dynamically assigning of a first resource further comprises assigning the first resource.

In accordance with an embodiment of the present invention, the first resource is assigned to a first edge node. In particular, the first resource corresponds to the one or more resources associated with the master controller in the intelligent edge cluster model.

In accordance with another embodiment of the present invention, the first resource is assigned corresponding to a second edge node in the intelligent edge cluster model. Particularly, the second edge node includes a count of resources more than resources required by an application executed at the first edge node; and/or

In accordance with yet another embodiment of the present invention, the first resource is assigned from a nearest edge node to the first edge node, when the first edge node has a predefined latency requirement. Particularly, the predefined latency requirement includes at least one of a latency key performance indicator, the nearest node is identified) based on the application requirement at the first edge node and one or more KPIs of the nearest edge node.

According to the third aspect of the present disclosure, the method further includes dynamically assigning a second resource from one or more resources in the virtual resource pool of the intelligent edge cluster model to the first edge node. Particularly, the first resource corresponds to the one or more resources associated with a second edge node. And, the second resource corresponds to the one or more resources associated with a third edge node.

According to the fourth aspect of the present disclosure the method further includes steps of determining if the application requirement and the at least one key performance indicator at the first edge node from the plurality of edge node is not met using the first resource, sending a request to assign one or more resource to a service orchestration entity based on the determination and dynamically assigning one or more resource to the service orchestration entity based on the request. In particular, the request comprises the application requirement and at least one key performance indicator.

In accordance with an embodiment of the present invention, at least one key performance indicator includes anyone indicator selected from a power, a space, a time, and a network link associated with each of a plurality of edge nodes.

According to the fifth aspect of the present disclosure, one or more resource are dynamically assigned to the service orchestration entity by reallocating the first edge node virtually in a second cluster network by the service orchestration entity, identifying a second edge cluster network to meet the application requirement and the at least one key performance indicator at the first edge node and dynamically assigning one or more resources from an another intelligent edge cluster model through the service orchestration entity.

Another embodiment of the present invention relates to a cluster master edge node for deploying an intelligent edge cluster model. In particular, the cluster master edge node includes a memory and a master controller coupled with the memory. In particular, the master controller is configured to check an application requirement and an at least one key performance indicator (KPI) at a first edge node from a plurality of edge node and dynamically assign a first resource from a one or more resources in a virtual resource pool of the intelligent edge cluster model to the first edge node, based on the application requirement and an at least one KPI.

According to the sixth aspect of the present disclosure, the master controller is configured to instruct one or more commands to another edge node in the intelligent edge cluster model for assigning one or more resources to the first edge node, dynamically assign the first resource from one or more resources in the virtual resource pool of the intelligent edge cluster model to the first edge node and instruct one or more commands to an another edge node in the intelligent edge cluster model for assigning one or more resources to the first edge node.

According to the seventh aspect of the present disclosure, the master controller assigns the first resource to the first edge node, and the first resource corresponds to one or more resource associated with the master controller (310) in the intelligent edge cluster model and/or assigns the first resource corresponding to a second edge node in the intelligent edge cluster model, and the second edge node includes a count of resources more than resources required by an application executed at the first edge node and/or assigns the first resource from a nearest edge node to the first edge node, when the first edge node has a predefined latency requirement.

In accordance with an embodiment of the present invention, the predefined latency requirement includes at least one of a latency key performance indicator, the nearest node is identified ) based on the application requirement at the first edge node and one or more KPIs of the nearest edge node.

According to the eighth aspect of the present disclosure, the master controller dynamically assign a second resource from one or more resources in the virtual resource pool of the intelligent edge cluster model to the first edge node, and wherein the first resource corresponds to one or more resource associated with a second edge node and the second resource corresponds to one or more resource associated with a third edge node.

According to the ninth aspect of the present disclosure, the master controller determines if the application requirement and an at least one key performance indicator at the first edge node from the plurality of edge node is not met using the first resource, sends a request to assign one or more resource to a service orchestration entity based on the determination and dynamically assigns one or more resource from the service orchestration entity based on the request. Particularly, the request comprises the application requirement and the key performance indicator. Moreover, at least one key performance indicator is selected from a power, a space, a time, and a network link associated with each of the plurality of edge nodes.

According to the an aspect of the present disclosure, the master controller assigns one or more resource assigned from the service orchestration entity by reallocating the first edge node virtually in a second edge cluster network by the service orchestration entity, identifying a second edge cluster network to meet the application requirement and the at least one key performance indicator at the first edge node and dynamically assigning one or more resource from the second edge cluster network through the service orchestration entity.

The foregoing solutions are attained by employing a method for deploying an intelligent edge cluster model.

### BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

The embodiments herein will be better understood from the following description with reference to the drawings, in which:
Fig. 1 is a block diagram illustrating a multi-service edge cluster connectivity architecture in accordance with an embodiment of the present invention;
Fig. 2 is a block diagram illustrating a node reassignment framework from one a cluster to another cluster in accordance with an embodiment of the present invention;
Fig. 3 is a block diagram illustrating a cluster master edge node in accordance with an embodiment of the present invention;
Fig. 4 is a flow chart illustrating a method for deploying an intelligent edge cluster model in accordance with an embodiment of the present invention;
Fig. 5 is a flow chart illustrating a method for managing and controlling a dynamic edge node participation and edge cluster infrastructure allocation by the cluster master edge node in accordance with an embodiment of the present invention;
Fig. 6 is a flow chart illustrating a method for dynamically selecting an edge node from a plurality of the edge nodes in accordance with an embodiment of the present invention;
Fig. 7 is a flow chart illustrating a method for joining a new edge node into a cluster network in accordance with an embodiment of the present invention;
Fig. 8 is a flow chart illustrating a method for handling resource requirements in the multi-service edge cluster connectivity architecture in accordance with an embodiment of the present invention.

### REFERENCE LIST

Multi-service edge cluster connectivity architecture 1000
Plurality of edge nodes 102a-102e
Cluster master edge node 104
Master controller 310
Edge cluster 106a- 106b
Node reassignment framework 2000
Plurality of cluster networks 220a-220c
Global service orchestrator (GSO) 210
Master controller 310
Communicator 320
Memory 330

The method and system are illustrated in the accompanying drawings, throughout which like reference letters indicate corresponding parts in the various figures.

It should be noted that the accompanying figure is intended to present illustrations of exemplary embodiments of the present disclosure. This figure is not intended to limit the scope of the present disclosure. It should also be noted that the accompanying figure is not necessarily drawn to scale.

### DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

### Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only".

Throughout this specification, unless the context requires otherwise the word "comprise", and variations such as "comprises" and "comprising", will be understood to imply the inclusion of a stated element or step or group of element or steps but not the exclusion of any other element or step or group of element or steps.

The term "including" is used to mean "including but not limited to". "Including" and "including but not limited to" are used interchangeably.

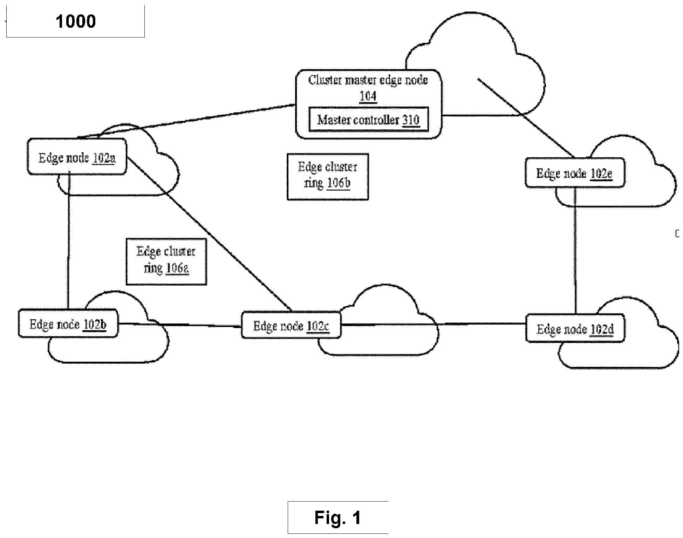

Fig. 1 is a block diagram illustrating a multi-service edge cluster connectivity architecture in accordance with an embodiment of the present invention. In particular, the multi-service edge cluster connectivity architecture (1000) includes a plurality of edge nodes (102a-102e) and a cluster master edge node (104). And, the cluster master edge node (104) includes a master controller (310). In particular, the cluster master edge node (104) may be selected or decided among any of the plurality of edge nodes (102a-102e). Moreover, the cluster master edge node (104) may be one of the plurality of edge nodes (102a-102e), having a user preferred combination of space, power and ambient temperature.

A user can select an edge node as cluster master edge node (104) from any of the plurality of edge nodes (102a-102e), based on user preference or computational requirement. Further, the cluster master edge node (104) may comprise a master controller (310) which may provide a plurality of control functions to the cluster master edge node (104).

In an exemplary example, any of the plurality of edge nodes (102a-102e) may have a master controller to provide controlling functions when the edge node is selected as the cluster master edge node (104).

In another example, the cluster master edge node (104) may be randomly selected from the plurality of edge nodes (102a-102e). Upon selecting one edge node as cluster master edge node (104), all remaining edge nodes may become host nodes.

In yet another example, cluster master edge node (104) and master controller (310) may be referred alternatively.

Particularly, the edge node (102a-102e) is a generic way of referring to any edge device, an edge server, or an edge gateway on which edge computing can be performed. The edge node (102a-102e) is also called an edge computing unit. Further, the edge nodes (102a-102c) communicate with each other to form an edge cluster (106a). The edge cluster (106a) is in a ring arrangement. In another example, the edge cluster (106a) is in a hub arrangement.

In another example, the edge cluster (106a) may form any shape based on user requirements.

The edge nodes (102a, 102c, 102d, and 102e) communicate with each other to form another edge cluster (106b). The communication among the edge nodes (102a-102e) is established based on a wired network and/or wireless network. In particular, the cluster master edge node (104) communicates with the edge node (102a and 102d). Moreover, the cluster master edge node (104) acts as a brain of the multi-service edge cluster connectivity architecture (1000) that assists an intelligent and dynamic assignment of resources in the cluster network and takes care of flexible utilization of resources within the cluster of edge nodes (102a-102e) and the cluster master edge node (104).

In an accordance with an embodiment, the cluster master edge node (104) may be at a customer point of purchase (PoP) or a central office or any aggregate site location which would have adequate space, power, and environmental conditions to host the access infrastructure and can also equip the other automation and orchestration functionalities. The edge nodes (102a-102e) would be included at the time of cluster formation as well the edge node (102a-102e) may participate in the cluster on the run time basis as well. This participation would be on a dynamic basis. Upon adding a new edge node in the network cluster, it may be checked if the newly added edge node is better suited as the cluster master edge node (104), based on the edge node KPIs or user preference or computational requirements. The newly added edge node may be dynamically selected as the cluster master edge node, if found better suited than the existing cluster master edge node (104).

In an accordance with an embodiment, in the multi-service edge cluster connectivity architecture (1000), each edge node (near edge nodes (102a-102e) and master edge node (104)) is associated with specific physical resources, which together form a virtual resource bank in the edge cluster. In particular, the cluster master edge node (104) checks the application requirement (bandwidth, latency and scalability) and real time KPIs at the edge node (e.g., edge node health, physical infrastructure - power, space and temperature, network links), based on which the resources (e.g., physical resources, functions, application, virtual machines) from the edge nodes (102a-102e) are dynamically assigned to the application by utilizing the virtual resource bank in the multi-service edge cluster connectivity architecture (1000).

The function may be, for example, but not limited to, a network function, a service virtualization function, a resource management function, a node management function. The application may be, for example, but not limited to, a virtual reality (VR) application, an enterprise application, a content delivery application, a gaming application, and a networking application or the like.

Alternatively, the KPIs are determined based on one or more bandwidth associated with the edge node (102a-102e), the latency associated with the edge node (102a-102e), scalability, compute resources and Data Path (DP) performance of the edge node (102a-102e), a quality of service (QoS) associated with the edge node (102a-102e), user quality of experience associated with the edge node (102a-102e), an optimum resource utilization associated with the edge node (102a-102e), a network characteristics degradation associated with the edge node (102a-102e), an underlay or overlay network services, business demands, and overall SLA requirements. The compute resources and DP performance may be, for example, but not limited to, a Kernel data path (DP), a user space DP, a Fast Data Path, Single-root input/output virtualization, and a hardware offloaded DP.

In accordance with an embodiment of the present invention, the application requirement at the edge node may include application specific requirements such as scalability, latency, and bandwidth associated with the application. The application requirement may be corresponding to user application at the edge node which serves the user by providing one or more resources for facilitating the application. The application requirement may be corresponding to application specific key performance indicators such as user quality of experience, quality of service and user required service level agreements (SLAs).

The operations and functions of the edge cluster (106a-106b) are monitored and controlled by the cluster master edge node (104). The edge cluster (106a-106b) includes a resource pool and a storage policy based on the service provider requirements or third party requirements. In some scenarios, the edge cluster (106a-106b) is created by an administrator of the service provider and configured in the multi-service edge cluster connectivity architecture (1000). The cluster master edge node (104) can balance organization edge services between the edge clusters (106a-106b). The edge clusters (106a-106b) can use a specific storage policy that is originated by the service provider.

The cluster master edge node (104) may be used for dynamic sharing and allocation of edge node resources to a user application in a local edge cluster based on application requirements and real-time edge node key performance indicator(s) (KPIs).

Alternatively, the cluster master edge node (104) checks the application requirements or KPIs of the UE application. The KPIs of each edge node in the cluster include the edge node health related information (e.g., power, space and temperature requirements) and physical infrastructure status. The resource allocation and sharing by the cluster master edge node (104) are decided based on the application requirement and edge node details.

Further, the cluster master edge node (104) is configured to dynamically select the edge nodes (102a-102e). The participation of the edge nodes (102a-102e) is decided on an overall minimum resource requirement. The overall minimum resource requirement of each edge node (102a-102e) is stored in a cluster network (not shown) or the cluster master edge node (104). The cluster network may be a self-adaptive edge cluster-based network.

In particular, the overall minimum resource requirement of each of the edge nodes (102a-102e) is obtained by using various methods (e.g., past infrastructure usage trends or the like). The past infrastructure usage trends are monitored and trained by a machine learning model. The machine learning model may be, for example, but not limited to, a linear regression model, a logistic regression model, a decision tree model, and a random forest model. The cluster network has to maintain the optimum number of the edge nodes (102a-102e) in the edge cluster (106a and 106b).

The optimum number of the edge nodes is determined based on key parameters. The key parameters may include bandwidth, scalability and latency requirements by one or more users in the edge cluster network. The optimum number of the edge nodes (102a-102e) in the cluster network provides the fast response of any request received from an application (not shown) executed in an electronic device/user equipment (not shown). The electronic device can be, for example, but not limited to a smart phone, a virtual reality device, an immersive system, a smart watch, a Personal Digital Assistant (PDA), a tablet computer, a laptop computer, and an Internet of Things (loT).

Further, the edge nodes (102a-102e) may be added to the cluster network if there is an additional infrastructure available after a defined limit (i.e., threshold) of the minimum cluster infrastructure and also, a cluster border edge node may be transferred to other cluster(s) if there is a scarcity of the resources (definitely the transfer of the edge node would be based on the use case basis e.g., less latency-sensitive apps, etc.). The threshold of minimum cluster infrastructure is defined by the service provider.

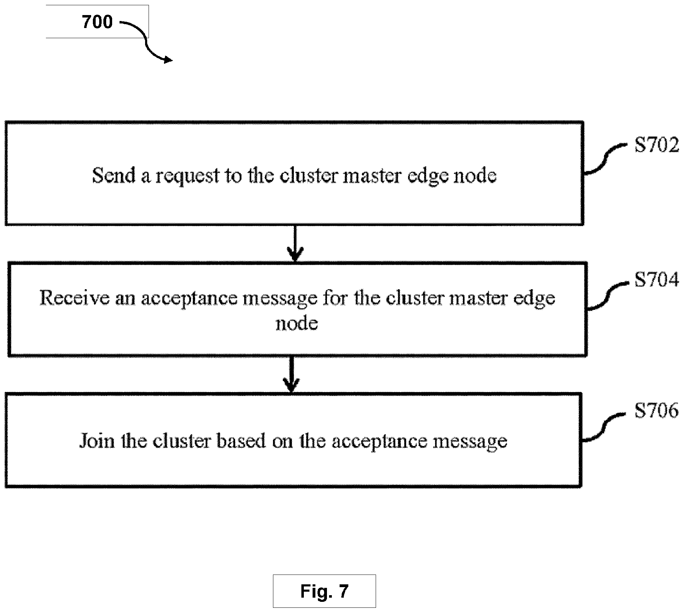

And, the participation of the edge nodes (102a-102e) in the cluster network may be dynamic and on run-time basis as well. If a new edge node is installed in the infrastructure, then the new edge node will send a request to the cluster master edge node (104). If the cluster master edge node (104) accepts the request, then the new edge node will be added to the cluster based on the acceptance (as shown in FIG. 7).

For instance, if the new edge node is installed in the infrastructure, then the new edge node will send requests to a first cluster master edge node and a second cluster master edge node. If the first cluster master edge node accepts the request, then the new edge node joins the cluster based on the acceptance of the first cluster master edge node. In an example, if a new edge node is installed, then the new edge node will send the requests to the nearby master edge cluster nodes. Whenever any edge node joins it will get broadcast addresses of cluster master nodes, which are nearby to that edge node. The edge node joins the cluster of whichever master cluster node responds first.

Alternatively, the edge cluster-based network performs dynamic sharing and intelligent optimization of the resources of the edge nodes (102a-102e) that assigns a right set of a virtualized infrastructure to a workload using the cluster master edge node (104). The workload is controlled by determining active edge nodes (102a-102e) in a predefined time using the cluster master edge node (104). The predefined time is set by the service provider.

Alternatively, the cluster master edge node (104) is the intelligent node, which performs the calculations and comparisons of edge node KPIs. The cluster master edge node (104) analyzes the UE application requirement (based on its KPIs) and allocates resources of edge nodes dynamically such that the QoS is maintained at UE, and simultaneously resources of all the edge nodes are utilized in an optimum manner.

When one of the edge nodes (102a-102e) is running short of storage capacity, then the respective edge node (102a-102e) can send a request to the cluster master edge node (104) to fulfil temporary storage requirements. The cluster master edge node (104) checks a cluster storage bank (not shown) and assigns the best suitable storage infrastructure to the requested edge nodes (102a-102e). The cluster storage bank stores the resources.

In intelligent content data networking, the edge nodes (102a-102e) maintain the caching segments to fulfil the high demanding content in quick response time and this will, in turn, save the backhaul bandwidth by not demanding the content from the regional storage servers and/or core DC storage servers every time. In case, if some particular edge nodes (102a-102e) experience some content being used frequently by their users, then the edge nodes (102a-102e) will cache that content at its location. But in case of unavailability of the storage, the edge nodes (102a-102e) can demand the storage from the cluster master edge node (104), which, in turn, will provide the necessary storage infrastructure from its nearest possible edge coordinates.

In accordance with an embodiment of the present invention, the multi-service edge cluster model is for dynamic infrastructure management within the self-adaptive edge cluster-based network. And, the multi-service edge cluster model is deployed in the edge nodes (102a-102e) and the cluster master edge node (104). Further, the method can be used to provide a dynamic framework for an edge node cluster participation and an edge cluster infrastructure allocation by the cluster master edge node (104). The cluster master edge node (104) can be used to manage and control a dynamic edge node cluster participation and edge cluster infrastructure allocation based on a plurality of parameters. The plurality of parameters can be, for example, but not limited to the power usage of the edge node (102a-102e), a space of the edge node (102a-102e) and an ambient environmental conditions of the edge node (102a-102e), bandwidth, latency, scalability, QoS, user quality of experience, optimum resource utilization, network characteristics degradation, underlay network services, overlay network services, business demands, and a service-level agreement (SLA) requirements.

Consider a scenario, when the edge node (102a) is running short of storage capacity, then the edge node (102a) can send a request to the cluster master edge node (104) to fulfil temporary storage requirements. Based on the request, the cluster master edge node (104) checks the cluster storage virtual bank and assigns the best suitable storage infrastructure to the requested edge node (102a). In an example, in an intelligent content data networking (iCaching), the edge node (102a) maintains caching segments to fulfil the high demanding content in quick response time and this will in turns saves the backhaul bandwidth by not demanding the content from regional/core DC storage servers every time. Now, if some particular edge node experiences some contents used frequently by its users, then the edge node will cache that content at its location. But in case of unavailability of the storage, the particular edge node may demand the storage from the master cluster edge node (104), which in turn will provide the necessary storage infra from its nearest possible edge coordinates. Now here, the master node (104) will decide the tenancy on the cluster edge based on the defined KPIs.

Further, one edge node can be a tenant of multiple clusters based on the dynamic user requirements coming on that particular edge node that may be due to some unpredicted occurred event. As per the cluster node request, the master edge node can provide the storage from the cluster sites to fulfil the temporary and immediate requirements.

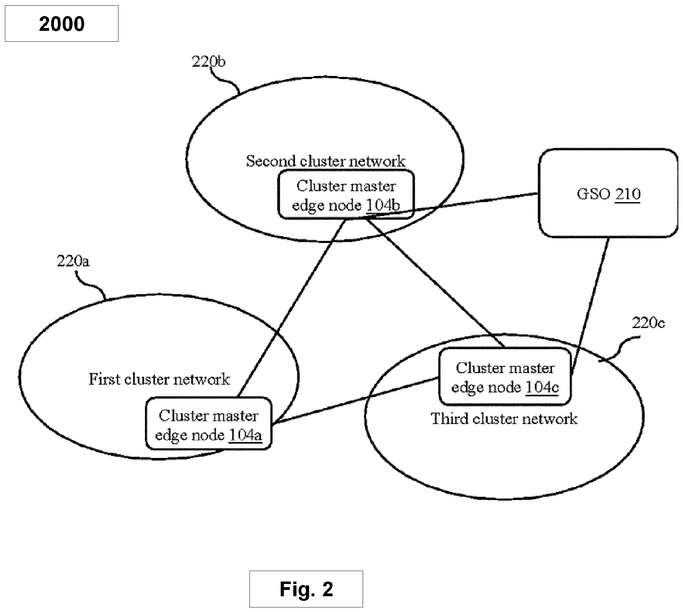

If any cluster network does not fulfil augmented demand of the edge node, either that would be due to limitation of the capacity of the cluster bank or not meeting the application KPIs or not meeting up the Dynamic KPIs indicator requirement, then in these scenarios, it will send the request to the Global Service Orchestrator (GSO) (explained in FIG. 2) to suggest the cluster that can fulfil the augmented demand/requirement of the particular edge node.

Now, in this case, the GSO (210) can check the requirement from the other nearby clusters, and based on the availability, it provides the temporary tenancy to the requested cluster edge node from the other nearby cluster edge node bank.

In another example, the invention may provide creation of a dynamic framework for participation of edge nodes within the edge cluster. One or more edge nodes may be added or removed from the edge cluster and the invention may provide dynamic interaction of all the edge nodes within the edge cluster. One or more resources corresponding to each of the edge nodes as well as the cluster master edge node may be shared among the edge nodes within the cluster, based on the application requirements and edge node key performance indicators. In another example, the invention may provide a model for dynamic resource management within the edge cluster, which is self-adaptive in nature. This means, the resource management within the edge cluster is dynamically controlled, based on the combined resource of the edge cluster, application requirements and edge node health (or KPIs).

Fig. 2 is a block diagram illustrating a node reassignment framework from one cluster to another cluster in accordance with an embodiment of the present invention. In particular, the node reassignment framework (2000) includes a plurality of cluster networks (220a-220c) and a service orchestration entity (e.g., Global Service Orchestrator (GSO)) (210). Each cluster network from the plurality of cluster networks (220a-220c) includes the cluster master edge node (104a-104c), respectively. Further, each cluster network from the plurality of cluster networks (220a-220c) is communicated with the GSO (210).

In a scenario, if any cluster network does not fulfil the augmented demand of the edge node (102a-102e), either that would be due to limitation of the capacity of the cluster bank or not meeting the application KPIs or not meeting up the dynamic KPIs indicator requirement, then in these scenarios, it will send the request to the Global Service Orchestrator (GSO) to suggest the cluster that can fulfil the augmented requirement of the particular edge node.

The GSO (210) can check the requirement from the other nearby clusters and based on the availability, the GSO (210) provides the temporary tenancy to the requested cluster edge node from the other nearby cluster edge node bank. If the cluster master node doesn't meet the major application KPIs and other KPIs, then the master node will request the GSO to reallocate the edge node to another nearby cluster that can fulfil the demands. This request will only be generated by the cluster master node, if the requested edge node doesn't have any dependency on the other cluster edge nodes, or in other words, it should not be a tenant or offering any tenancy.

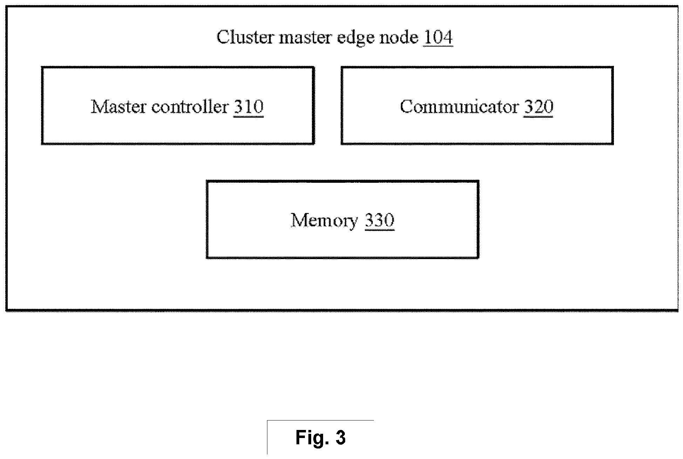

Fig. 3 is a block diagram illustrating a cluster master edge node in accordance with an embodiment of the present invention. In particular, the cluster master edge node (104) includes a master controller (310), a communicator (320), and a memory (330). The master controller (310) is coupled with the communicator (320) and the memory (330). The master controller (310) is configured to check the application requirement and at least one key performance indicator at the first edge node (102a) from the plurality of edge nodes (102a-102e).

After checking the application requirement and at least one key performance indicator at the first edge node (102a) from the plurality of edge node (102a-102e), the master controller (310) assign the first resource corresponding to the second edge node (102b) in the edge cluster to the first edge node. In particular, the second edge node (102b) comprises a count of resources more than resources required by the application executed at the first edge node (102a).

Alternatively, after checking the application requirement and at least one key performance indicators at the first edge node (102a) from the plurality of edge node (102a-102e), the master controller (310) assign the first resource from the nearest edge node (i.e., second edge node (102b) shown in FIG. 1) to the first edge node (102a), when the first edge node (102a) has a pre-defined latency requirement. The predefined latency requirement may include at least one of a latency key performance indicator or latency related service level agreements (SLAs). The pre-defined latency requirement may be defined for each application at the edge node as a minimum latency SLA that the application may accept without compromising on the quality of experience or quality of service for the user. The nearest node (102b) is identified by the master controller (310) based on the application requirement at the first edge node (102a) and one or more KPIs of the nearest edge node (102b).

Alternatively, after checking the application requirement and one or more key performance indicators at the first edge node (102a) from the plurality of edge nodes (102a-102e), the master controller (310) assigns the first resource to the first edge node (102). In particular, the first resource corresponds to one or more resources associated with the master controller (310) in the intelligent edge cluster model.

In accordance with an embodiment of the present invention, the master controller (310) is configured to instruct one or more commands to another edge node (102b-102e) in the intelligent edge cluster model for assigning one or more resources to the first edge node (102a).

In accordance with an embodiment of the present invention, the master controller (310) is configured to dynamically assign a second resource from one or more resources in the virtual resource pool of the intelligent edge cluster model to the first edge node (102a), where the first resource corresponds to one or more resource associated with the second edge node (102b), and where the second resource corresponds to one or more resource associated with a third edge node (102c).

In accordance with an embodiment of the present invention, the master controller (310) is configured to execute instructions stored in the memory (330) and to perform various processes. Particularly, the communicator (320) is configured for communicating internally between internal hardware components and with external devices via one or more networks. Moreover, the memory (330) stores instructions to be executed by the processor (110). At least one of the plurality of modules may be implemented through an AI (artificial intelligence) model. A function associated with AI may be performed through the non-volatile memory, the volatile memory, and the processor.

In accordance with an embodiment of the present invention, the master controller (310) may include one or more processors. And, one or more processors may be a general purpose processor, such as a central processing unit (CPU), an application processor (AP), or the like, a graphics-only processing unit such as a graphics processing unit (GPU), a visual processing unit (VPU), and/or an AI-dedicated processor such as a neural processing unit (NPU). Further, one or more processors control the processing of the input data in accordance with a predefined operating rule or artificial intelligence (Al) model stored in the non-volatile memory and the volatile memory. The predefined operating rule or artificial intelligence model is provided through training or learning.

Here, being provided through learning means that, by applying a learning algorithm to a plurality of learning data, the predefined operating rule or AI model of a desired characteristic is made. The learning may be performed in a device itself, and/or may be implemented through a separate server/system.

In accordance with an embodiment of the present invention, the AI model may consist of a plurality of neural network layers. Each layer has a plurality of weight values and performs a layer operation through calculation of a previous layer and an operation of a plurality of weights. Examples of neural networks include, but are not limited to, convolutional neural network (CNN), deep neural network (DNN), recurrent neural network (RNN), restricted Boltzmann Machine (RBM), deep belief network (DBN), bidirectional recurrent deep neural network (BRDNN), generative adversarial networks (GAN), and deep Q-networks.

In accordance with an embodiment of the present invention, the learning algorithm is a method for training a predetermined target device (for example, a robot) using a plurality of learning data to cause, allow, or control the target device to make a determination or prediction. Examples of learning algorithms include, but are not limited to, supervised learning, unsupervised learning, semi-supervised learning, or reinforcement learning.

Although FIG. 3 shows various hardware components of the cluster master edge node (104) but it is to be understood that other embodiments are not limited thereon. Alternatively, the cluster master edge node (104) may include less or more number of components. Further, the labels or names of the components are used only for illustrative purposes and do not limit the scope of the invention. One or more components can be combined together to perform the same or substantially similar function in the cluster master edge node (104).

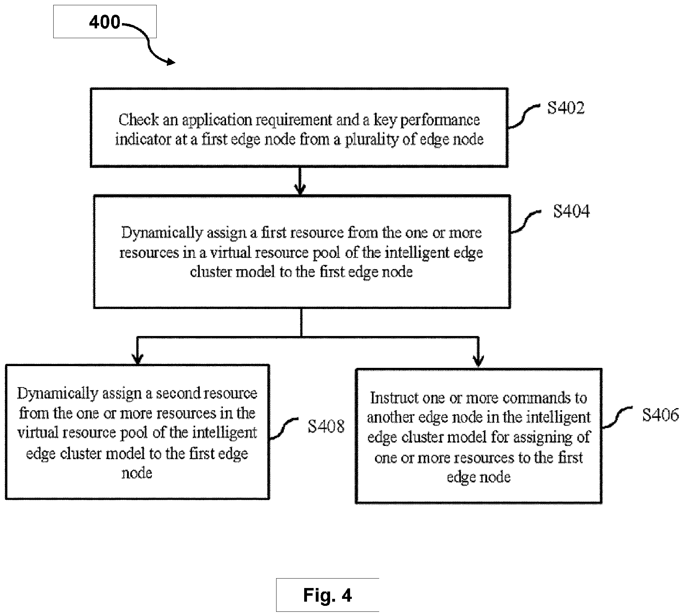

Fig. 4 is a flow chart illustrating a method for deploying an intelligent edge cluster model. The steps (402-408) are performed by the cluster master edge node (104).

The method 400 starts at step 402. At 402, the application requirement and one or more key performance indicators is checked at the first edge node from the plurality of edge node (102a-102e).

In particular, the method may be used to intelligently assign the resources of all the edge nodes in the cluster, to the UE application, based on the UE application KPIs and edge node KPIs. In particular, the UE application requirements and current condition of the selected edge node are checked, by checking the KPIs for the UE application and all edge nodes. It provides data for the requirements and available resources (in the shareable resource pool created by adding network resources of all the edge nodes) and further provides optimum ways to allocate edge node resources by the master edge node.

Moreover, checking of the edge node key performance indicators (KPIs) at the master node and adaptively assigns the resources to the user node by pulling the resources from shortest distance nodes (for stringent KPIs application/for low latency requirements) or from the master node (for high bandwidth requirements). Thus, provides optimum resource usage within the local edge cluster and provides flexibility to the telecom service provider, which can use basic hardware infrastructure at edge nodes. The dynamic resource assignment using the virtual resource bank in the cluster is performed by assigning the resources to the application by the local edge node (if there is no resource scarcity) or by the nearest edge nodes (for low latency application /stringent QoS) or by the resource pool from master edge node (for high bandwidth application), based on edge node KPI requirements.

At 404, the first resource from one or more resources in the virtual resource pool of the intelligent edge cluster model is dynamically assigned to the first edge node.

At 406, one or more commands are instructed to another edge node in the intelligent edge cluster model for assigning one or more resources to the first edge node. The assigning of resources from one or more edge nodes intelligently, in a real-time manner.

At 408, the second resource is dynamically assigned from one or more resources in the virtual resource pool of the intelligent edge cluster model to the first edge node.

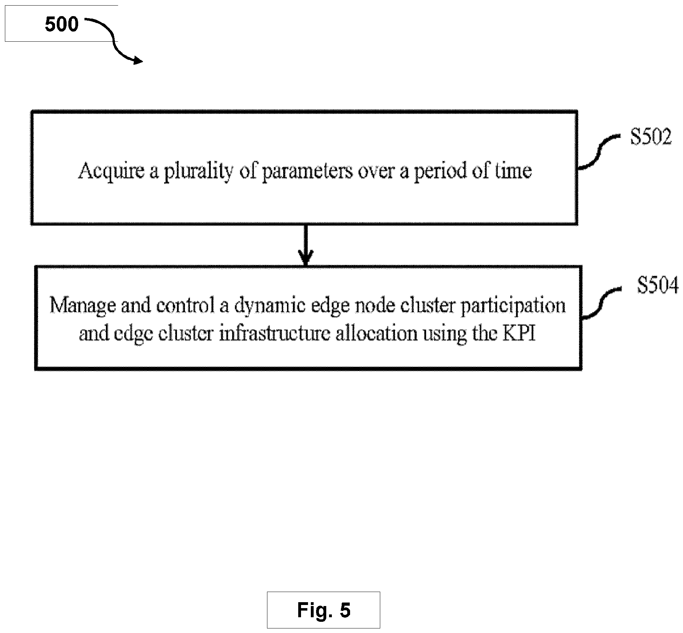

Fig. 5 is a flow chart illustrating a method for managing and controlling a dynamic edge node participation and edge cluster infrastructure allocation by the cluster master edge node in accordance with an embodiment of the present invention. In particular, the steps (502 and 504) are performed by the cluster master edge node (104).

The method starts at step 502. At 502, the plurality of parameters of edge nodes (102a-102e) are acquired in real-time and on a regular time interval. In particular, the plurality of parameters can be, for example, but not limited to the power usage of the edge node (102a-102e), a space of the edge node (102a-102e), and ambient environmental conditions of the edge node (102a-102e) bandwidth, latency, and scalability, QoS, user quality of experience, optimum resource utilization, network characteristics degradation, underlay network services, overlay network services, business demands, and the SLA requirements.

At 504, the dynamic edge node cluster participation and edge cluster infrastructure allocation is managed and controlled by a dynamic selection of edge host nodes and allocating the associated network resources to the UE application. The plurality of parameters is acquired and trained over a period of time using a machine learning model.

In other words, the cluster master edge node (104) is performing comparison and analysis of the KPIs (UE application as well as edge node KPIs) - based on which the participation and allocation of edge nodes and their resources are controlled.

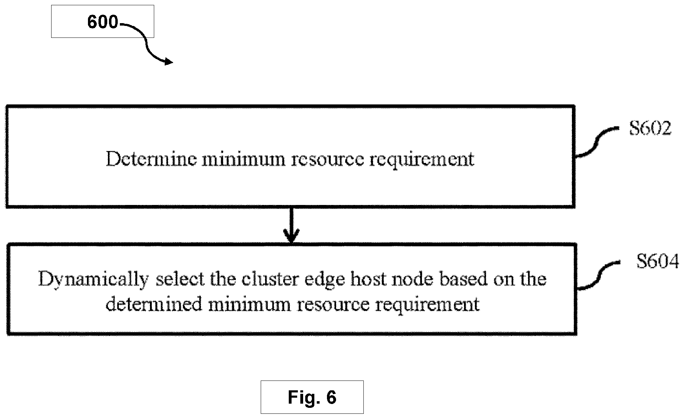

Fig. 6 is a flow chart illustrating a method for dynamically selecting an edge node from a plurality of the edge nodes in accordance with an embodiment of the present invention. In particular, the steps (602 and 604) are performed by the cluster master edge node (104). At step 602, the minimum resource requirement is determined. At step 604, the edge nodes (102a-102e) are dynamically selected based on the determined minimum resource requirement.

Fig. 7 is a flow chart illustrating a method for joining a new edge node into a cluster network in accordance with an embodiment of the present invention. The method 700 starts at step 702 and proceeds to step 704 and 706. At step 702, the new edge node sends a request to the cluster master edge node (104). At step 704, the new edge node receives the acceptance message for the cluster master edge node (104). At step 706, the new edge host node joins the cluster based on the acceptance message.

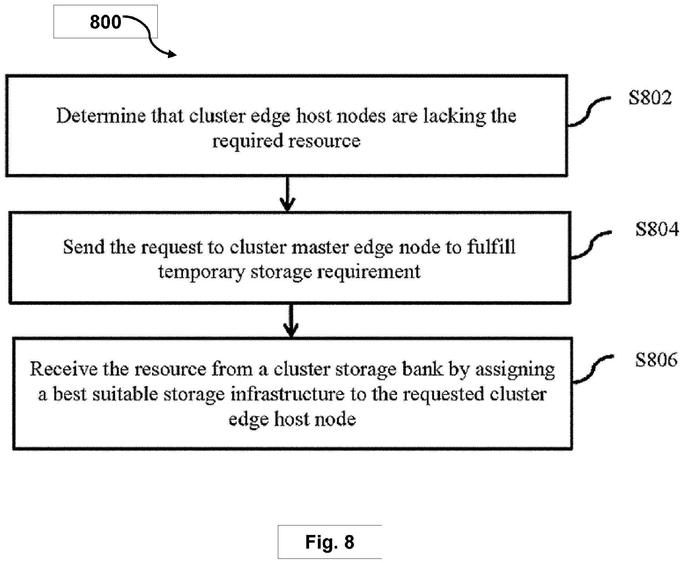

Fig. 8 is a flow chart illustrating a method for handling resource requirements in the multi-service edge cluster connectivity architecture in accordance with an embodiment of the present invention. The method 800 starts at step 802 and proceeds to step 804, 806.

At step 802, one or more edge nodes of the edge nodes (102a-102e) are determined lacking the required resource.

At step 804, the request is sent including the resource related information to the cluster master edge node (104) to fulfil temporary storage requirements.

At step 806, the resources are received from the cluster storage bank, created by pooling resources of all the edge nodes, by assigning the best suitable storage infrastructure or resources to the respective edge node(s) which requested the resources (102a-102e).

In particular, the resource bank is created by pooling of network resources by all the edge nodes (102a-102e). The cluster master edge node (104) also, may add its associated resources to the resource bank. Further, when one or more edge nodes (102a-102e) lacks the resources to support a UE application, one or more edge nodes (102a-102e) requests the master edge node (104) to allocate some resources from the resource bank. In this case, the requirement of the resources is temporary, as the resources are required only to fulfil the need of the current UE application.

The edge node (102a-102e) includes a processor (not shown), a communicator (not shown), and a memory (not shown). The processor is configured to execute instructions stored in the memory and to perform various processes. The communicator is configured for communicating internally between internal hardware components and with external devices via one or more networks. The memory also stores instructions to be executed by the processor.

The various actions, acts, blocks, steps, or the like in the method (400, 500, 600, 700, and 800) may be performed in the order presented, in a different order, or simultaneously. Further, in some embodiments, some of the actions, acts, blocks, steps, or the like may be omitted, added, modified, skipped, or the like without departing from the scope of the invention.

The embodiments disclosed herein can be implemented using at least one software program running on at least one hardware device and performing network management functions to control the elements.

Overall, the present disclosure provides dynamic sharing and allocation of resources of an edge node by a master edge node to a user application in a local edge cluster based on application requirements and real-time edge node key performance indicators (KPIs), effectively and dynamically build/fulfil edge infrastructure requirements based on business triggers/requirements, power, space, and ambient environmental constraints at edge site locations with limited support of technical equipment and without deploying high energy consumption systems/equipment's at the edge site locations. Moreover, the dynamic and adaptive edge infrastructure can be accessed across an edge network to serve the dynamic and challenging service demands. Further, the method realizes and justifies the cost per bit per near-end edge node investment by a service provider.

A person of ordinary skill in the art may be aware that, in combination with the examples described in the embodiments disclosed in this specification, units and algorithm steps may be implemented by electronic hardware, computer software, or a combination thereof.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

While several possible embodiments of the disclosure have been described above and illustrated in some cases, it should be interpreted and understood as to have been presented only by way of illustration and example, but not by limitation. Thus, the breadth and scope of a preferred embodiment should not be limited by any of the above-described exemplary embodiments.

It will be apparent to those skilled in the art that other embodiments of the invention will be apparent to those skilled in the art from consideration of the specification and practice of the invention. While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope of the invention. It is intended that the specification and examples be considered as exemplary, with the true scope of the invention being indicated by the claims.

The methods and processes described herein may have fewer or additional steps or states and the steps or states may be performed in a different order. Not all steps or states need to be reached. The methods and processes described herein may be embodied in, and fully or partially automated via, software code modules executed by one or more general purpose computers. The code modules may be stored in any type of computer-readable medium or other computer storage device. Some or all of the methods may alternatively be embodied in whole or in part in specialized computer hardware.

The results of the disclosed methods may be stored in any type of computer data repository, such as relational databases and flat file systems that use volatile and/or non-volatile memory (e.g., magnetic disk storage, optical storage, EEPROM and/or solid state RAM)

The various illustrative logical blocks, modules, routines, and algorithm steps described in connection with the embodiments disclosed herein can be implemented as electronic hardware, computer software, or combinations of both. To clearly illustrate this interchangeability of hardware and software, various illustrative components, blocks, modules, and steps have been described above generally in terms of their functionality. Whether such functionality is implemented as hardware or software depends upon the particular application and design constraints imposed on the overall system. The described functionality can be implemented in varying ways for each particular application, but such implementation decisions should not be interpreted as causing a departure from the scope of the disclosure.

Moreover, the various illustrative logical blocks and modules described in connection with the embodiments disclosed herein can be implemented or performed by a machine, such as a general purpose processor device, a digital signal processor (DSP), an application specific integrated circuit (ASIC), a field programmable gate array (FPGA) or other programmable logic device, discrete gate or transistor logic, discrete hardware components or any combination thereof designed to perform the functions described herein. A general purpose processor device can be a microprocessor, but in the alternative, the processor device can be a controller, microcontroller, or state machine, combinations of the same, or the like. A processor device can include electrical circuitry configured to process computer-executable instructions. In another embodiment, a processor device includes an FPGA or other programmable device that performs logic operations without processing computer-executable instructions. A processor device can also be implemented as a combination of computing devices, e.g., a combination of a DSP and a microprocessor, a plurality of microprocessors, one or more microprocessors in conjunction with a DSP core, or any other such configuration. Although described herein primarily with respect to digital technology, a processor device may also include primarily analog components.

Disjunctive language such as the phrase "at least one of X, Y, Z," unless specifically stated otherwise, is otherwise understood with the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present.

In a case that no conflict occurs, the embodiments in the present invention and the features in the embodiments may be mutually combined.

The foregoing descriptions are merely specific implementations of the present invention but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for deploying an intelligent edge cluster model, **characterized in that** steps of:
checking, by a master controller (310), an application requirement and at least one key performance indicator at a first edge node from a plurality of edge node (102a-102e);
dynamically assigning, by the master controller (310), a first resource from a one or more resources in a virtual resource pool of the intelligent edge cluster model to the first edge node, based on the application requirement and an at least one key performance indicators; and
instructing, by the master controller (310), one or more commands to another edge node in the intelligent edge cluster model for assigning one or more resources to the first edge node;
wherein the intelligent edge cluster model includes a plurality of edge nodes (102a-102e) and the master controller (310) having corresponding one or more resources and the one or more resources are combined to form the virtual resource pool to fetch the one or more resources from any of the plurality of edge node (102a-102e) and the master controller (310).

2. The method as claimed in claim 1, wherein the one or more resources includes one or more of physical resources, functions, applications, and virtual machines.

3. The method as claimed in any preceding claim, wherein the dynamically assigning of a first resource further comprises:
assigning the first resource to a first edge node, and the first resource corresponds to the one or more resource associated with the master controller (310) in the intelligent edge cluster model; and/or
assigning the first resource corresponding to a second edge node in the intelligent edge cluster model, and the second edge node includes a count of resources more than resources required by an application executed at the first edge node; and/or
assigning the first resource from a nearest edge node to the first edge node, when the first edge node has a predefined latency requirement;
wherein the predefined latency requirement includes at least one of a latency key performance indicator, the nearest node is identified by the master controller (310) based on the application requirement at the first edge node and one or more KPIs of the nearest edge node.

4. The method as claimed in any preceding claim, wherein the method further comprising step of:
dynamically assigning, by the master controller (310), a second resource from the one or more resources in the virtual resource pool of the intelligent edge cluster model to the first edge node; and
wherein the first resource corresponds to the one or more resource associated with a second edge node and the second resource corresponds to the one or more resource associated with a third edge node.

5. The method as claimed in any preceding claim, wherein the method further comprising:
determining, by the master controller (310), if the application requirement and the at least one key performance indicator at the first edge node from the plurality of edge node is not met using the first resource;
sending, by the master controller (310), a request to assign one or more resource to a service orchestration entity (210) based on the determination; and
dynamically assigning, by the master controller (310), the one or more resource to the service orchestration entity (210) based on the request;
wherein the request comprises the application requirement and the at least one key performance indicator.

6. The method as claimed in claim 5, wherein the at least one key performance indicator is selected from a power, a space, a time, and a network links associated with each of a plurality of edge nodes.

7. The method as claimed in claim 5 or claim 6, wherein the one or more resource is dynamically assigned to the service orchestration entity (210) by the master controller (310) by:
reallocating the first edge node virtually in a second cluster network by the service orchestration entity (210);
identifying a second edge cluster network to meet the application requirement and the at least one key performance indicator at the first edge node; and
dynamically assigning, the one or more resources from an another intelligent edge cluster model through the service orchestration entity (210).

8. A cluster master edge node (104) for deploying an intelligent edge cluster model, **characterized by**:
a memory (330); and
a master controller (310), coupled with the memory (330), configured to:
check an application requirement and an at least one key performance indicator (KPI) at a first edge node from a plurality of edge node (102a-102e); and
dynamically assign a first resource from a one or more resources in a virtual resource pool of the intelligent edge cluster model to the first edge node, based on the application requirement and an at least one KPI;
wherein the intelligent edge cluster model includes a plurality of edge nodes (102a-102e) and a master controller (310) having corresponding one or more resources and the one or more resources are combined to form the virtual resource pool to fetch the one or more resources from any of the plurality of edge node (102a-102e) and the master controller (310).

9. The cluster master edge node (104) as claimed in claim 8, wherein the master controller (310) is configured to
instruct one or more commands to another edge node in the intelligent edge cluster model for assigning the one or more resources to the first edge node;
dynamically assign the first resource from the one or more resources in the virtual resource pool of the intelligent edge cluster model to the first edge node; and
instruct one or more commands to an another edge node in the intelligent edge cluster model for assigning one or more resources to the first edge node.

10. The cluster master edge node (104) as claimed in claim 8 or 9, wherein the master controller (310):
assigns the first resource to the first edge node, and the first resource corresponds to the one or more resource associated with the master controller (310) in the intelligent edge cluster model; and/or
assigns the first resource corresponding to a second edge node in the intelligent edge cluster model, and the second edge node includes a count of resources more than resources required by an application executed at the first edge node; and/or
assigns the first resource from a nearest edge node to the first edge node, when the first edge node has a predefined latency requirement;
wherein the predefined latency requirement includes at least one of a latency key performance indicator, the nearest node is identified by the master controller (310) based on the application requirement at the first edge node and one or more KPIs of the nearest edge node.

11. The cluster master edge node (104) as claimed in claim 8 to 10, the master controller (310) dynamically assign a second resource from the one or more resources in the virtual resource pool of the intelligent edge cluster model to the first edge node, and wherein the first resource corresponds to the one or more resource associated with a second edge node and the second resource corresponds to the one or more resource associated with a third edge node.

12. The cluster master edge node (104) as claimed in claim 8 to 11, wherein the master controller (310) is configured to:
determine if the application requirement and an at least one key performance indicator at the first edge node from the plurality of edge node is not met using the first resource;
send a request to assign one or more resource to a service orchestration entity (210) based on the determination; and
dynamically assign the one or more resource from the service orchestration entity (210) based on the request;
wherein the request comprises the application requirement and the key performance indicator.

13. The cluster master edge node (104) as claimed in claim 12, wherein the at least one key performance indicator is selected from parameters selected from a power, a space, a time, and a network links associated with each of the plurality of edge nodes.

14. The cluster master edge node (104) as claimed in claim 8 to 13, wherein the master controller (310) assigns the one or more resource assigned from the service orchestration entity (210) by:
reallocating the first edge node virtually in a second edge cluster network by the service orchestration entity (210);
identifying a second edge cluster network to meet the application requirement and the at least one key performance indicator at the first edge node; and
dynamically assigning the one or more resource from the second edge cluster network through the service orchestration entity (210).

15. The cluster master edge node (104) as claimed in claim 8 to 14, wherein the one or more resources includes one or more of physical resources, functions, applications, and virtual machines.
